# EUROPÄISCHE PATENTANMELDUNG

(11) **EP 1 376 801 A1**
(43) Veröffentlichungstag der Anmeldung: **02.01.2004**
(21) Anmeldenummer: 03012754.2
(22) Anmeldetag: 05.06.2003
(51) Int. Cl.: H02G 3/14

(54) **Elektrisches Installationsgerät mit Tragrahmen und mindestens einem an diesem befestigten Einsatz**

(30) Priorität: 20.06.2002 DE 10227399
(71) Anmelder: ABB PATENT GmbH, 68526 Ladenburg (DE)
(72) Erfinder: Wheeler, David, A., P., Warton nr Tamworth B79 OJJ (GB); Delamont, Christopher, Burntwood, Staffordshire WS7 OHQ (GB)
(74) Vertreter: Miller, Toivo

(57) **Zusammenfassung**

Es wird ein elektrisches Installationsgerät mit Tragrahmen und mindestens einem an diesem befestigten Einsatz vorgeschlagen,
- wobei der quadratisch oder rechteckförmig ausgebildete Tragrahmen (1) an zwei gegenüberliegenden Rahmenseiten (17, 19) mit jeweils mindestens zwei nach innen weisenden, abgewinkelten Arretierungs-Anschlagflächen (2, 3, 4) und mit jeweils mindestens einer zwischen zwei Arretierungs-Anschlagflächen angeordneten, nach innen weisenden starren Rastfläche (7, 8) versehen ist,
- wobei die anderen gegenüberliegenden Rahmenseiten (18, 20) des Tragrahmens (1) jeweils mit nach innen weisenden Seitenbegrenzungen (5, 6) versehen sind,
- wobei der Einsatz (11, 16) im Bereich seiner Frontseite und im Bereich seiner Außenkanten auf zwei gegenüberliegenden Seiten jeweils mit nach außen weisenden Arretierungs-Anschlagflächen (13, 14) versehen ist, welche Schrägflächen aufweisen, deren Winkel mit dem Winkel der Abwinkelungen der Arretierungs-Anschlagflächen (2, 3, 4) des Tragrahmens (1) korrespondiert,
- wobei der Einsatz (11, 16) mit einer zwischen diesen Arretierungs-Anschlagflächen (2, 3, 4) angeordneten, nach außen weisenden federnden Rastnase (15) versehen ist
- und wobei die Arretierungs-Anschlagflächen (13, 14) des Einsatzes (11, 16) korrespondierend zu den Arretierungs-Anschlagflächen (2, 3, 4) des Tragrahmens (1) und die federnden Rastnasen (15) korrespondierend zu den starren Rastflächen (7, 8) angeordnet sind, so daß bei Anschlag der Arretierungs-Anschlagflächen (2, 3, 4, 13, 14) eine Verrastung der Rastnasen (15) mit den Rastflächen (7, 8) erfolgt.

## Beschreibung

Die Erfindung bezieht sich auf ein elektrisches Installationsgerät mit Tragrahmen und mindestens einem an diesem befestigten Einsatz gemäß dem Oberbegriff des Anspruchs 1. Die Erfindung kann beispielsweise für Unterputz-Steckdosen, Unterputz-Schalter und Unterputz-Taster verwendet werden.

Aus der DE 199 20 653 A1 ist ein Tragring für ein elektrisches Installationsgerät bekannt, welcher doppelt rechtwinklig abgewinkelte, beliebig lang und breit ausgebildete Laschen zur Befestigung eines Einsatzes (beispielsweise eines Sockels einer Doppelsteckdose) aufweist.

Aus der DE 37 43 557 A1 ist ein Befestigungssystem für Gerätesockel bekannt, bei welchem ein an seiner seitlichen Außenfläche im Bereich seiner Rückseite mit seitlich abstehenden federnden Vorsprüngen bzw. Rastfedern versehener Gerätesockel in ein hierfür vorbereitetes Gehäuse mit innen angeordneten Rastkanten eingeführt und mit dem Gehäuse fest (aber lösbar) verbunden wird. Der Gerätesockel kann insbesondere in elektrischen Installationsgeräten Verwendung finden, um deren Montage zu vereinfachen.

Der Erfindung liegt die Aufgabe zugrunde, ein elektrisches Installationsgerät mit Tragrahmen und mindestens einem an diesem befestigten Einsatz der eingangs genannten Art anzugeben, bei welchem eine präzise Arretierung von einem oder mehreren Einsätzen gewährleistet ist.

Diese Aufgabe wird in Verbindung mit den Merkmalen des Oberbegriffes erfindungsgemäß dadurch gelöst,
- daß der quadratisch oder rechteckförmig ausgebildete Tragrahmen an zwei gegenüberliegenden Rahmenseiten mit jeweils mindestens zwei nach innen weisenden, abgewinkelten Arretierungs-Anschlagflächen und mit jeweils mindestens einer zwischen zwei Arretierungs-Anschlagflächen angeordneten, nach innen weisenden starren Rastfläche versehen ist,
- daß die anderen gegenüberliegenden Rahmenseiten des Tragrahmens jeweils mit nach innen weisenden Seitenbegrenzungen versehen sind,
- daß der Einsatz im Bereich seiner Frontseite und im Bereich seiner Außenkanten auf zwei gegenüberliegenden Seiten jeweils mit nach außen weisenden Arretierungs-Anschlagflächen versehen ist, welche Schrägflächen aufweisen, deren Winkel mit dem Winkel der Abwinkelungen der Arretierungs-Anschlagflächen des Tragrahmens korrespondiert,
- daß der Einsatz mit einer zwischen diesen Arretierungs-Anschlagflächen angeordneten, nach außen weisenden federnden Rastnase versehen ist
- und daß die Arretierungs-Anschlagflächen des Einsatzes korrespondierend zu den Arretierungs-Anschlagflächen des Tragrahmens und die federnden Rastnasen korrespondierend zu den starren Rastflächen angeordnet sind, so daß bei Anschlag der Arretierungs-Anschlagflächen eine Verrastung der Rastnasen mit den Rastflächen erfolgt.

Die mit der Erfindung erzielbaren Vorteile bestehen insbesondere darin, daß mittels der miteinander korrespondierenden Arretierungs-Anschlagflächen von Tragrahmen und Einsatz und der Seitenbegrenzungen des Tragrahmens eine präzise Ausrichtung des zu befestigenden Einsatzes innerhalb des Tragrahmens gewährleistet ist, während die lösbare Fixierung selbst mittels der federnden Rastnasen des Einsatzes erfolgt, welche mit korrespondierenden Rastflächen des Tragrahmens zusammenarbeiten. In gewünschter Weise können beliebig viele Einsätze innerhalb eines dementsprechend ausgestalteten Tragrahmens befestigt werden, was insbesondere bei elektrischen Installationsgeräten gemäß British Standard von Interesse ist.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine Sicht auf die Frontseite eines Tragrahmens eines elektrischen Installationsgerätes,
- Fig. 2: eine Sicht auf die Rückseite eines Einsatzes eines elektrischen Installationsgerätes,
- Fig. 3: eine Sicht auf die Frontseite eines zwei Einsätze aufweisenden elektrischen Installationsgerätes.

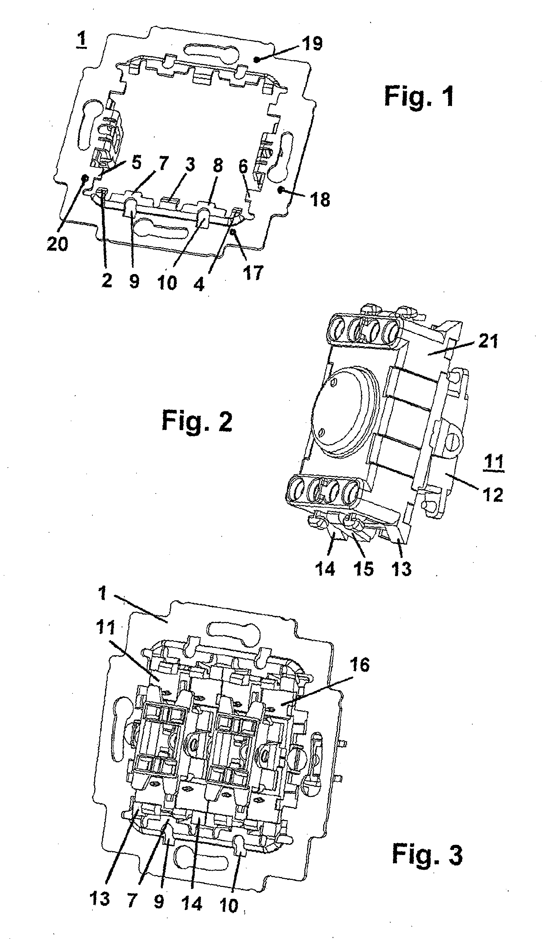

In Fig. 1 ist eine Sicht auf die Frontseite eines Tragrahmens eines elektrischen Installationsgerätes dargestellt. Der quadratische oder rechteckförmige Tragrahmen 1 mit seinen vier Rahmenseiten 17, 18, 19, 20 dient in allgemein bekannter Weise zur Montage des Installationsgerätes in/an einer Unterputzdose. Im gezeigten Tragrahmen 1 können zwei Einsätze befestigt werden. Zwei gegenüberliegende Rahmenseiten 17, 19 des Tragrahmens 1 sind hierzu jeweils mit folgenden nach innen weisenden Komponenten versehen:
- mit einer ersten äußeren, abgewinkelten Arretierungs-Anschlagfläche 2,
- mit einer mittleren, abgewinkelten Arretierungs-Anschlagfläche 3 (deren Breite der zweifachen Breite der äußeren Arretierungs-Anschlagfläche ist),
- mit einer einer zweiten äußeren, abgewinkelten Arretierungs-Anschlagfläche 4,
- mit einer ersten starren Rastfläche 7 symmetrisch zwischen den Arretierungs-Anschlagflächen 2, 3 und
- mit einer zweiten starren Rastfläche 8 symmetrisch zwischen den Arretierungs-Anschlagflächen 3, 4.

Die zwei weiteren gegenüberliegenden Rahmenseiten 18 bzw. 20 des Tragrahmens 1 sind hierzu jeweils mit nach innen weisenden Seitenbegrenzungen 5 bzw. 6 versehen.

Nahe bei den Rastflächen 7 bzw. 8 ist jeweils ein Schlitz 9 bzw. 10 im Tragrahmen 1 vorgesehen, um in einfacher Art und Weise eine Demontage eines Einsatzes zu ermöglichen.

In Fig. 2 ist eine Sicht auf die Rückseite eines Einsatzes eines elektrischen Installationsgerätes dargestellt. Der Einsatz 11 ist beispielhaft als Schalter oder Taster ausgeführt und besteht aus einem quaderförmigen Hauptkörper 21 mit hieran an der Frontseite beweglich befestigtem Kipphebel 12 für die Schaltbetätigung. Die beiden Schmalseiten des Hauptkörpers 21 sind im Bereich ihrer Frontseiten mit nach außen weisenden Arretierungs-Anschlagflächen 13, 14 versehen. Diese Arretierungs-Anschlagflächen 13, 14 weisen Schrägflächen auf, welche mit den Abwinkelungen der Arrertierungs-Anschlagflächen 2, 3, 4 korrespondieren, d. h. deren Winkel dem Winkel der Abwinkelungen der Arretierungs-Anschlagflächen 2, 3, 4 des Tragrahmens 1 angepaßt ist. Zwischen beiden Arretierungs-Anschlagflächen 13, 14 ist eine federnde Rastnase 15 angeordnet.

Zur Befestigung des Einsatzes 11 im Tragrahmen 1 wird der Einsatz 11 zunächst derart ausgerichtet, daß seine Rückseite zur Frontseite des Tragrahmens 11 gerichtet ist. Anschließend wird der Einsatz 11 unter Beachtung dieser Ausrichtung durch den Tragrahmen 1 gesteckt, so daß die federnden Rastnasen 15 entlang der Rastflächen 7 gleiten. Die seitliche Ausrichtung zwischen Tragrahmen und Einsatz wird durch die Seitenbegrenzungen 5 des Tragrahmens 1 vorgegeben. Das Einstecken wird begrenzt, indem die Arretierungs-Anschlagflächen 13 bzw. 14 des Einsatzes 11 gegen die Arretierungs-Anschlagflächen 2 bzw. 3 des Tragrahmens stoßen. Gleichzeitig federn in dieser Endposition bzw. Arretierungsposition die Rastnasen 15 unter die Rückseiten der Rastflächen 7 zurück, so daß eine Fixierung des Einsatzes 11 innerhalb des Tragrahmens erfolgt.

In Fig. 3 ist eine Sicht auf die Frontseite eines zwei Einsätze aufweisenden elektrischen Installationsgerätes dargestellt. Wie gut zu erkennen ist, sind zwei Einsätze 11, 16 im Tragrahmen 1 montiert. Die Arretierung der Einsätze 11, 16 erfolgt,
- indem die Arretierungs-Anschlagflächen 13, 14 der Einsätze 11, 16 an den korrespondierenden Arretierungs-Anschlagflächen 2, 3, 4 des Tragrahmens 1 anliegen,
- indem die zurückgefederten Rastnasen 15 der Einsätze 11, 16 an den Rückseiten der Rastflächen 7, 8 anliegen.

Eine Demontage eines Einsatzes 11 bzw. 16 aus dem Tragrahmen 1 ist in einfacher Weise möglich, indem ein Werkzeug (beispielsweise ein Schraubendreher mit schmaler Klinge) in die Schlitze 9 bzw. 10 eingeführt wird, so daß die Rastnasen 15 gegen die Seitenwandungen des Hauptkörpers 21 des Einsatzes gedrückt werden, so daß die Verrastung gelöst wird und der Einsatz anschließend aus dem Tragrahmen 1 gezogen werden kann.

Im vorstehenden Ausführungsbeispiel ist die Variante eines zwei Einsätze aufnehmenden Tragrahmens behandelt, der erfindungsgemäße Vorschlag ist darüber hinaus selbstverständlich auch für Varianten mit nur einem Einsatz, mit drei Einsätzen, mit vier Einsätzen usw. verwendbar, wobei jeweils die Breite des Tragrahmens entsprechend der Anzahl der zu montierenden Einsätze ausgebildet ist.

## Patentansprüche

1. Elektrisches Installationsgerät mit Tragrahmen und mindestens einem an diesem befestigten Einsatz, **dadurch gekennzeichnet,**
- **daß** der quadratisch oder rechteckförmig ausgebildete Tragrahmen (1) an zwei gegenüberliegenden Rahmenseiten (17, 19) mit jeweils mindestens zwei nach innen weisenden, abgewinkelten Arretierungs-Anschlagflächen (2, 3, 4) und mit jeweils mindestens einer zwischen zwei Arretierungs-Anschlagflächen angeordneten, nach innen weisenden starren Rastfläche (7, 8) versehen ist,
- **daß** die anderen gegenüberliegenden Rahmenseiten (18, 20) des Tragrahmens (1) jeweils mit nach innen weisenden Seitenbegrenzungen (5, 6) versehen sind,
- **daß** der Einsatz (11, 16) im Bereich seiner Frontseite und im Bereich seiner Außenkanten auf zwei gegenüberliegenden Seiten jeweils mit nach außen weisenden Arretierungs-Anschlagflächen (13, 14) versehen ist, welche Schrägflächen aufweisen, deren Winkel mit dem Winkel der Abwinkelungen der Arretierungs-Anschlagflächen (2, 3, 4) des Tragrahmens (1) korrespondiert,
- **daß** der Einsatz (11, 16) mit einer zwischen diesen Arretierungs-Anschlagflächen (2, 3, 4) angeordneten, nach außen weisenden federnden Rastnase (15) versehen ist
- und **daß** die Arretierungs-Anschlagflächen (13, 14) des Einsatzes (11, 16) korrespondierend zu den Arretierungs-Anschlagflächen (2, 3, 4) des Tragrahmens (1) und die federnden Rastnasen (15) korrespondierend zu den starren Rastflächen (7, 8) angeordnet sind, so daß bei Anschlag der Arretierungs-Anschlagflächen (2, 3, 4, 13, 14) eine Verrastung der Rastnasen (15) mit den Rastflächen (7, 8) erfolgt.

2. Elektrisches Installationsgerät nach Anspruch 1, **dadurch gekennzeichnet, daß** zur Demontage eines Einsatzes (11, 16) aus dem Tragrahmen (1) nahe bei den Rastflächen (7, 8) jeweils ein Schlitz (9, 10) im Tragrahmen (1) vorgesehen ist.
